# EUROPEAN PATENT SPECIFICATION

(11) **EP 2 269 538 B1**
(45) Date of publication and mention of the grant of the patent: **06.12.2017**
(21) Application number: 09733806.5
(22) Date of filing: 23.04.2009
(51) Int. Cl.: A61C 8/00

(54) **SCREW FOR ATTACHING A PROSTHESIS TO A DENTAL IMPLANT, CARRIER, KIT AND SPANNER**
SCHRAUBE ZUR BEFESTIGUNG EINER PROTHESE AN EINEM DENTALIMPLANTAT SOWIE TRÄGER, KIT UND SCHRAUBENSCHLÜSSEL DAFÜR
VIS DE FIXATION DE PROTHÈSE SUR UN IMPLANT DENTAIRE, TRANSPORTEUR, KIT ET CLÉ DE SERRAGE

(30) Priority: 24.04.2008 ES 200801180
(43) Date of publication of application: 05.01.2011
(73) Proprietor: Farre Berga, Ramón, 25001 Lleida (ES); Farre Berga, Oriol, 25001 Lleida (ES)
(72) Inventor: FARRE BERGA, Ramón, 25001 Lleida (ES)
(74) Representative: Carvajal y Urquijo, Isabel
(86) International application number: PCT/ES2009/000220
(87) International publication number: WO 2009/130350

(56) References cited:
- EP-A1- 0 230 678
- EP-A1- 0 811 358
- EP-A1- 1 836 991
- WO-A1-01/05326
- WO-A2-2008/024062
- DE-A1- 4 326 841

## Description

### FIELD OF THE INVENTION

The object of the present invention consists of a screw to fix prostheses on dental implants, the head of which enables to press it up to 30° inclinations with respect to the axis of said screw.

The tools which enable to perform these operations are also the object of the present invention, specifically, a **torque key** and a reusable **surgical driver** which allows for the screws to be sterile, not to be touched by any hands, dropped or lost when handled, and to have an anti-loose design.

### BACKGROUND OF THE INVENTION

The use of screws to fix prostheses in the field of dental implants, being said screws accessed to through channels of the dental prostheses. These screws usually have a connection or Allen hex head, and in order to insert them the key is inserted in the axis of the screw and the implant, limiting the cases of direct connection and needing more intermediate parts and more work. Likewise, to use them it is essential to hold them with the fingers first to insert the corresponding torque key and later insert them, watching that they do not fall, inside the prosthesis inserted in the mouth.

In order to place a prosthesis on a dental implant a screw is needed, which is screwed into the implant and which holds the prosthesis.

This screw is inserted through a hole of the prosthesis called channel and to avoid affecting the prosthesis aesthetics, said hole or channel has to be hidden by the buccal part of the prosthesis, that is to say, by the part which cannot be seen just by looking at it. The inclination of this channel, determined by the position in which the implant is placed, does not always have the best angulation for several causes (deficient bone, bad planning, among others).

If there is good angulation, it is possible to make a direct connection, that is to say, without intermediate elements; the screw is threaded through the prosthesis channel and said channel is carefully covered to have access to the screw in the future. The direct connection facilitates the dentist's and dental technician's work, since the lack of intermediate steps reduces the cost and makes it easier to extract the prosthesis for check-ups.
If there is not good angulation, it is possible to use a dynamic pillar (Max. 20°) or angled intermediate parts can be placed and on top of them a cemented prosthesis can be inserted which affects the aesthetics (more thickness) and hinders the extraction for check-ups (they can be broken when extracting them with a dental hammer), and they significantly increase the cost of the work.
Until now, in the case of a direct connection, the dentist takes the following steps: an Allen screw is threaded by hand, making it unsterile, the Allen torque key is inserted and carefully preventing it from falling, the screw is inserted through the channel of the prosthesis placed on top of the implant to finally push it. Up to now, it is possible to correct up to 20° using an appropriate key. The document 2.278.477 A1 shows a ball-top Allen key, very well-known in the hardware area.

Documents DE4326841 and WO2008024062 disclose a screw to fix a prosthesis on a dental implant according to the preamble of claim 1.

Document EP1836991 discloses a surgical driver for driving a dental implant with a spherical head.

Document EP811358 discloses a torque key for inserting dental implants and abutments. However, the proposals known have the following inconveniences:
- Unsterile screws, possible infections
- Bad handling of the screw since it is very small and has to be held using gloves
- Correction of only 20° of angulation
- Problems with the torque key with the screw, since the screw can be blocked and the key may not be properly fitted
- The screw head hexagon can be overtorqued
- Few cases of direct connection

### DESCRIPTION OF THE INVENTION

The present invention comprises a screw to fix dental prostheses with a spherical knuckle-shaped head. Said knuckle has a plurality of grooves coinciding with the surgical driver and the torque key.
The head has the special feature of enabling the keys to act with an inclination of up to 30° with respect to the screw axis. In this way, the channel can have up to 30° of angulation with respect to the axis of the implant, thus enabling to correct most direct connection cases.
The screw also has an embossment under its head, in the area in contact with the prosthesis, which reduces the risk of getting loose.

The sterile reusable **surgical driver** can be applied with the screw and is easily removed when the threading is over.

Once the screw to fix the dental prosthesis is inserted with the help of the surgical driver it is threaded in the dental implant. Later, the surgical driver is removed and the desired pressure is exerted with the **torque key** mounted on the compatible dynamometric ratchet.

Thus, a first aspect of the invention refers to a screw to fix a prosthesis on a dental implant, wherein:
the prosthesis has:
   an external or exposed face oriented towards the exterior of the mouth;
   an internal or hidden face opposite the external or exposed face, comprising a channel, being the channel the cavity of the prosthesis through which the screw passes, which has a specific inclination determined by the position of the implant;
the screw has:
   a threaded pin or first end comprising fixing means arranged to fix the screw in the implant in a detachable way;
   a head, or second end opposite the first end, arranged to house the prosthesis.

In the screw of the invention:
the head comprises a protruding area which is mostly spherical and knuckle-shaped and has a plurality of sunken areas, flutes or curved-concave meridional grooves:
   arranged to receive a grip, clamp or tooth of a handling tool for the screw;
   with a latitude between ±80°, with respect to the equator of the head. This arrangement of the head of the screw enables it to be adapted with the end of the surgical driver and the torque key, which makes it possible to handle the screw through a channel located in a prosthesis with a 30° inclination with respect to the axis of the fixing screw.

The head can comprise a part which is seated on the dental implant and has a fluted radial protruding area with anti-loose characteristics.

Besides, the head can comprise a log-copic-shaped part which is seated on the dental implant.

Specifically, the screw can comprise between 2 to 10 sunken areas, although most frequently it has 6.

A second aspect of the invention refers to a surgical driver comprising:
a work part comprising:
   fastening means with a shape which combines with the shape of the head of the screw, the fastening means comprising:
      a housing with the shape of a mainly spherical cavity, having a larger diameter than the spherical protruding area of the screw to be fastened;
      a plurality of anchoring grips with the shape of a curved-concave protruding area, featuring flaps, hooks or tongues located in the equator of the housing, arranged to fit in the sunken areas; the surgical driver is similar to the torque key; the surgical driver is made of rigid plastic, allowing a closer fitting with the screw, which makes the screw more secured;
a handling part comprising a pin-shaped fix grip to form the handle of the surgical driver.

In the surgical driver of the invention:
the handling part can also comprise:
   opening and closing means to move the anchoring grips and the flaps between:
      a receiving position, in which the screw can be inserted between the anchoring grips and the flaps and; a fastening position, in which the screw is clasped by the anchoring grips and the flaps, opening and closing means comprising:
         the cap-shaped handling part located on the connecting part, arranged to be moved between: an open position, where the anchoring grips and the flaps are in a receiving position and; a closed position, where the anchoring grips and the flaps are in a fastening position;
         the surgical driver also comprises a mechanism arranged for the handling part to be moved between the open and closed positions by a movement selected between sliding movement, rotating movement and combinations thereof.

The surgical driver can be reused to store the screw for each patient, since the screw is also reusable so that it can be sterilized at a patient's follow-up, stored and inserted again.

A third aspect of the invention refers to a kit of screw to fix a prosthesis on a dental implant comprising the previously described surgical driver and screw and a protective cap where the screw, and at least the work part of the surgical driver are encapsulated in a sterile environment.

A fourth aspect of the invention refers to torque key comprising:
a work part comprising:
   dragging means with a shape which combines with that of the head of the screw, the dragging means comprising:
      a housing with the shape of a mostly spherical cavity, having a larger diameter than the spherical protruding area of the screw to be fastened;
      a plurality of anchoring grips with the shape of a curved-concave protruding area, arranged to fit in the sunken areas;
a pin-shaped handling part to form a handle of the torque key;
a mandrel-shaped connecting part to form universal connecting means arranged to connect the torque key to a dentist's ratchet.

### BRIEF DESCRIPTION OF THE DRAWINGS

The following is a brief description of a series of drawings which will help understand the invention better clearly relating to an embodiment of said invention which is presented as a non-limiting example thereof.

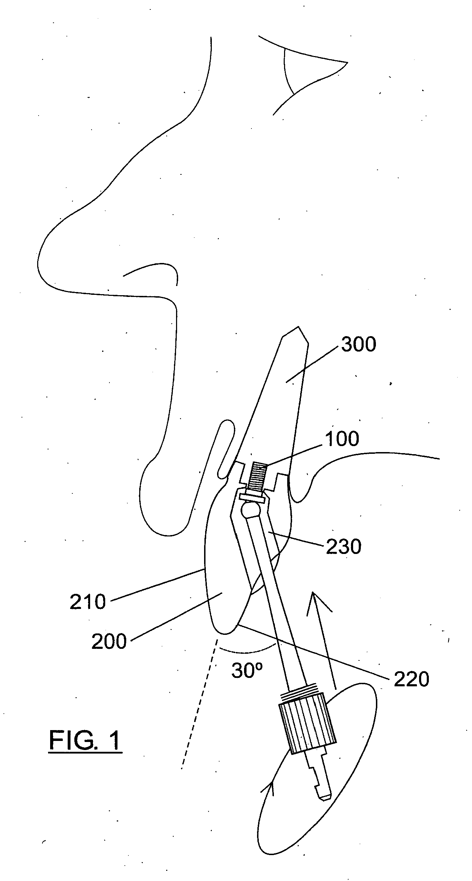

Figure 1 is a sectional drawing showing a prosthesis inserted on an implant with a screw held by a surgical driver.
Figure 2A is a view of a surgical driver. Figure 2B is a detailed view of the surgical driver, showing the work part where the housing and anchoring grips can be seen. Figure 2C is a view of the surgical driver with a cap.
Figure 3A is a view of a torque key. Figure 3B is a detailed view of the torque key showing the work position where the housing and anchoring grips can be seen.

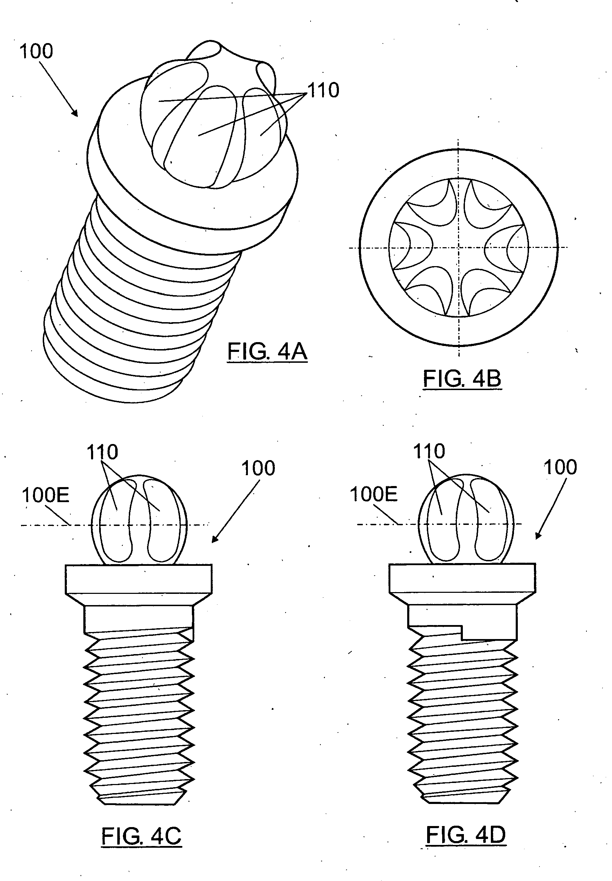

Figures 4A-4D show perspective, plant and elevated views of the screw.
Figure 5 shows a perspective view of an embodiment variant of the work part of the torque key or surgical driver.
Figure 6 shows a lateral elevation view of an embodiment variant of the head of the screw, to be operated with the work part of figure 5.
Figure 7 shows the coupling between the work position of figure 5 and the head of the screw of figure 6.

### DESCRIPTION OF A PREFERRED EMBODIMENT OF THE INVENTION

A first embodiment of the invention refers to a screw (100) to fix a prosthesis (200) on a dental implant (300), wherein:
the prosthesis (200) has:
   an external or exposed face (210) oriented towards the exterior of the mouth;
   an internal or hidden face (220) opposite the external or exposed face (210), comprising a channel, being the channel the cavity of the prosthesis (200) through which the screw (100) passes, which has a specific inclination determined by the position of the implant (300);
the screw (100) has:
   a threaded pin or first end comprising fixing means arranged to fix the screw (100) in the implant (300) in a detachable way;
   a head, or second end opposite the first end, arranged to house the prosthesis (200).

In the screw (100) of the invention:
the head comprises a protruding area which is mostly spherical knuckle-shaped and has a plurality of sunken areas (110), flutes or curved-concave meridional grooves:
   arranged to receive a grip (410, 510), clamp or tooth of a handling tool (400, 500) for the screw (100);
   with a latitude between ±80°, with respect to the equator (100E) of the head. This arrangement of the head of the screw (100) enables it to be adapted to the end of the surgical driver and the torque key, which enables to manipulate the screw (100) through a channel (230), located in a prosthesis with a 30° inclination with respect to the axis of the fixing screw.

The head comprises a part which is seated on the dental implant (300) and has a fluted radial protruding area with anti-loose characteristics.

Besides, the head comprises a log-conic-shaped part which is seated on the dental implant (300).

In a preferred embodiment of the invention, the screw (100) can comprise 6 sunken areas.

A second embodiment of the invention refers to a surgical driver (400) comprising:
a work part comprising:
   fastening means with a shape which combines with the shape of the head of the screw (100), the fastening means comprising:
      a housing (415) with the shape of a mainly spherical cavity, having a larger diameter than the spherical protruding area of the screw (100) to be fastened;
      a plurality of anchoring grips (410) with the shape of a curved-concave protruding area, featuring flaps, hooks or tongues (410A) located in the equator (400E) of the housing (415), arranged to fit in the sunken areas (110); the surgical driver is similar to the torque key; the surgical driver is made of rigid plastic, allowing a closer fitting with the screw, which makes the screw more secured;
a handling part comprising a pin-shaped fix grip (410) to form the handle of the surgical driver (400).

The fastening means which have anchoring grips (410) and the flaps, hooks or tongues (410A) can be made of rigid plastic.

The work part can also comprise a plurality of sunken areas (411) between the anchoring grips (410) for the surgical driver (400) to easily be inserted in the head of the screw (100).

In the surgical driver (400) of the invention:
opening and closing means to move the anchoring grips (410) and the flaps (410A) between: a receiving position, in which the screw (100) can be inserted between the anchoring grips (410) and the flaps (410A) and; a fastening position, in which the screw (100) is clasped by the anchoring grips (410) and the flaps (410A), said opening and closing means comprising:
   the cap-shaped handling part (430) located on the connecting part (420), arranged to be moved between: an open position, where the anchoring grips (410) and the flaps (410A) are in a receiving position and; a closed position, where the anchoring grips (410) and the flaps (410A) are in a fastening position;
the surgical driver (400) also comprises a mechanism arranged for the handling part (430) to be moved between the open and closed positions by a movement selected between sliding movement, rotating movement and combinations thereof.

The surgical driver (400) can be reused to store the screw for each patient, since the screw is also reusable so that it can be sterilized at a patient's follow-up, stored and inserted again. The surgical driver (400) can also have a thread (440) to hold fast the plastic cap (450) which encloses the work part and a screw (100).

A third aspect of the invention refers to a kit of screw (100) to fix a prosthesis (200) on a dental implant comprising the previously described surgical driver (400) and screw (100) and a protective cap (450) where the screw (100), and at least the work part of the surgical driver (400) are encapsulated in a sterile environment.

A fourth embodiment of the invention refers to torque key (500) comprising:
a work part comprising:
   dragging means with a shape which combines with that of the head of the screw (100), said dragging means comprising:
   a housing (515) with the shape of a mostly spherical cavity, having a larger diameter than the spherical protruding area of the screw (100) to be fastened;
   a plurality of anchoring grips (510) with the shape of a curved-concave protruding area, located in an equator (500E) of the housing (515) arranged to fit in the sunken areas (110);
a pin-shaped handling part (530) to form a handle of the torque key (500);
a mandrel-shaped connecting part (520) to form universal connecting means arranged to connect the torque key (500) to a dentist's ratchet.

The work part can also comprise openings (511A) in a plurality of grooves (511) between the anchoring grips (510) to facilitate the inserting of the torque key (500) in the head of the screw (100) in up to 30° angles.

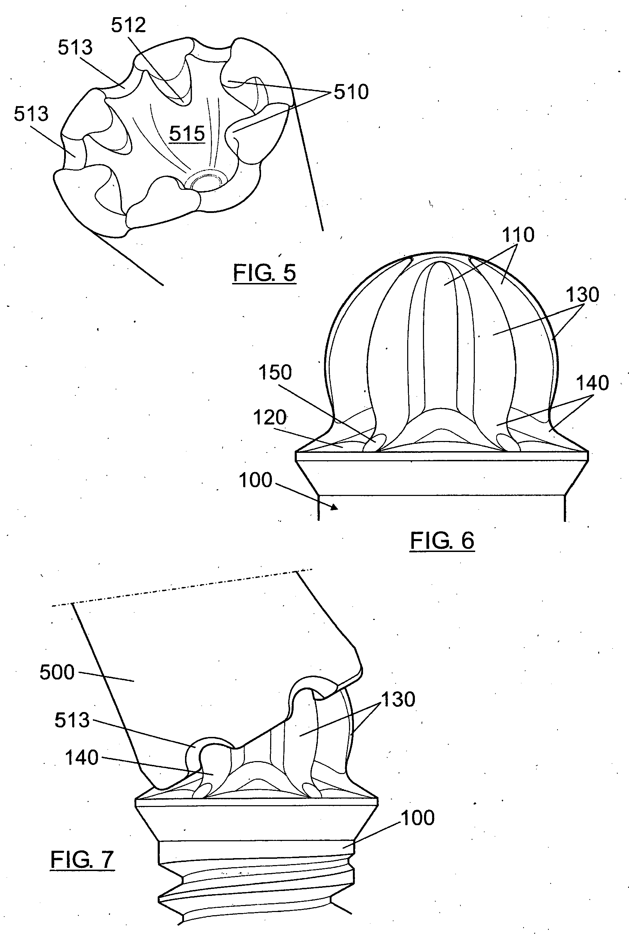

In the embodiment shown in figure 6, the protruding part of the head of the screw 100 is surrounded at its base by a log-conic surface 120, on which there are stretched out nerves 130 separating the meridional sunken areas 110, by a decreasing section 140 and whose free end can have a beveled edge or inclined plane 150.

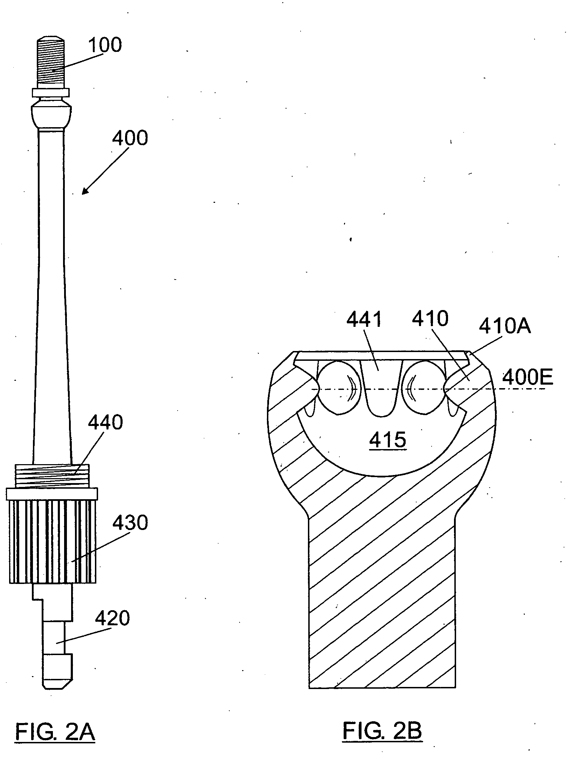

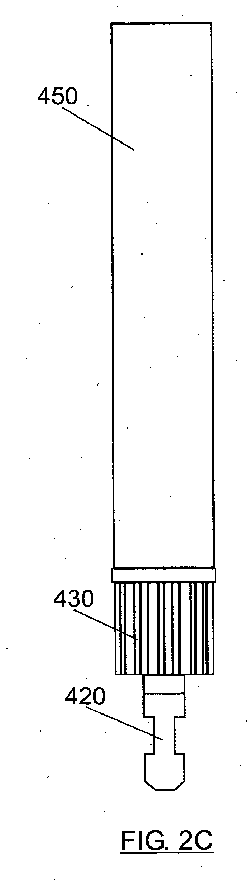

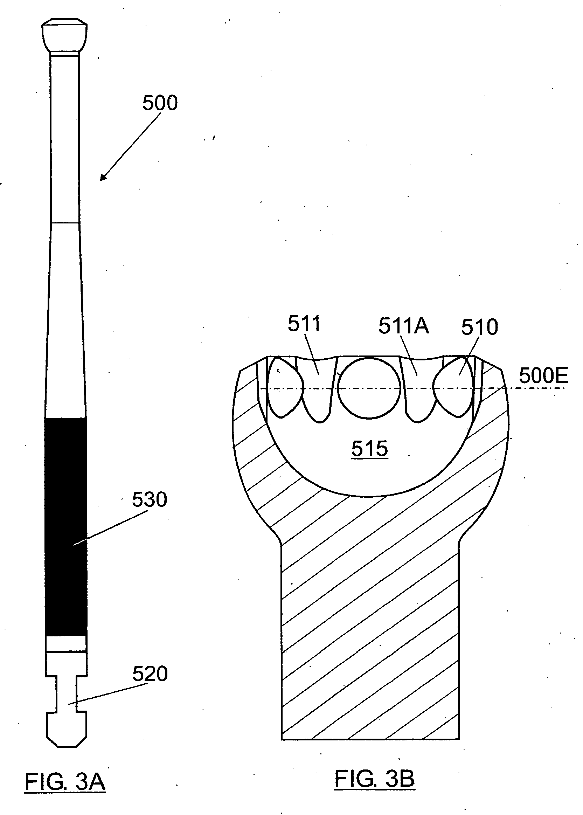

As regards the work part of the torque key, it will have the arrangement shown in figure 5, in which the grooves 511 of figure. 3B are missing and the protruding parts which constitute the anchoring grips 510 extend inwardly in a section 512, which serves as reinforcement means of the tool, and reach the upper edge of the wall limiting the housing 515. Besides, this wall features, in positions altered with anchoring grips 510, recesses 513, with a curved-concave outline, which are coupled on the sections 140 of the nerves 130, as shown in figure 7, given more security to the performance of the screw 100 through the torque key 500.
The same configuration of figure 5 can be applied to the work part of the surgical driver, shown in figure 2B.

## Claims

1. A screw (100) to fix a prosthesis (200) on a dental implant (300), wherein:
the prosthesis (200) has:
an external face (210) towards the exterior of the mouth;
an internal face (220) opposite the external or exposed face (210), comprising a channel (230), which has a specific inclination determined by the position of the implant (300);
the screw (100) has:
a pin comprising fixing means arranged to fix the screw (100) in the implant (300) in a detachable way;
a head, arranged to house the prosthesis (200) and comprising a protruding area which is mostly spherical, **characterized in that** said protruding area is knuckle-shaped and has a plurality of curved-concave meridional sunken areas (110):
arranged to receive a grip (410, 510) of a handling tool (400, 500) for the screw (100);
with a latitude between ±80°, with respect to the equator (100E) of the head.

2. Screw (100) to fix a prosthesis (200) on a dental implant (300) according to claim 1 **characterized in that** the head comprises a part which is seated on the dental implant (300) and has a fluted radial protruding area with anti-loose characteristics.

3. Screw (100) to fix a prosthesis (200) on a dental implant (300) according to any of the claims 1-2 **characterized in that** the head comprises a log-conic-shaped part which is seated on the dental implant (300).

4. Screw (100) to fix a prosthesis (200) on a dental implant (300) according to any of the claims 1-3 **characterized in that it** comprises 6 sunken areas (110).

5. A surgical driver (400) comprising a work part comprising:
fastening means with a shape which combines with the shape of the head of the screw (100) according to claim 1, the fastening means comprising:
a housing (415) with the shape of a mainly spherical cavity, having a larger diameter than the spherical protruding area of the screw (100) to be fastened;
a plurality of anchoring grips (410) with the shape of a curved-concave protruding area, featuring flaps (410A) located in the equator (400E) of the housing (415), arranged to fit in the sunken areas (110);
a handling part (430) comprising a pin-shaped fix grip (410) to form the handle of the surgical driver (400);
a mandrel-shaped connecting part (420) to form universal connecting means arranged to connect the surgical driver (400) to a dentist's ratchet.

6. A surgical driver (400) according to claim 5 **characterized in that:**
the handling part comprises:
opening and closing means to move the anchoring grips (410) and the flaps (410A) between: a receiving position, in which the screw (100) can be inserted between the anchoring grips (410) and the flaps (410A) and; a fastening position, in which the screw (100) is clasped by the anchoring grips (410) and the flaps (410A), said opening and closing means comprising:
the cap-shaped handling part (430) located on the connecting part (420), arranged to be moved between: an open position, where the anchoring grips (410) and the flaps (410A) are in a receiving position and; a closed position, where the anchoring grips (410) and the flaps (410A) are in a fastening position;
the surgical driver (400) also comprises a mechanism arranged for the handling part (430) to be moved between the open and closed positions by a movement selected between sliding movement, rotating movement and combinations thereof.

7. Kit of screw (100) to fix a prosthesis (200) on a dental implant (300) **characterized in that** it comprises the surgical driver (400) of any of the claims 5-6, the screw (100) according to any of the claims 1-4 and a protective cap (450) where the screw (100) and at least the work part of the surgical driver (400) are encapsulated in a sterile environment.

8. A torque key (500) comprising a work part comprising:
dragging means with a shape which combines with that of the head of the screw (100) according to claim 1, the dragging means comprising:
a housing (515) with the shape of a mostly spherical cavity, having a larger diameter than the spherical protruding area of the screw (100) to be fastened;
a plurality of anchoring grips (510) with the shape of a curved-concave protruding area, located in a equator (500E) of the housing (515), arrange to fit in the sunken areas (110);
a pin-shaped handling part (530) to form a handle of the torque key (500);
a mandrel-shaped connecting part (520) to form universal connecting means arranged to connect the torque key (500) to a dentist's ratchet.

9. Screw (100) to fix a prosthesis (200) on a dental implant (300) according to claim 1 **characterized in that** the nerves (130) which separate the meridional sunken areas (110) stretch out radially on the surface (120) surrounding the base of the protruding part of the head of the screw in decreasing sections (140).

10. Torque key (500) according to claim 8, **characterized in that** the anchoring grips (510) extend inwardly in a reinforcement section (512), and **in that** the wall limiting the housing (515) features recesses (513), which can be coupled on the sections (140) of the screw (100).

## Patentansprüche

1. Schraube (100) zum Befestigen einer Prothese (200) an einem Dentalimplantat (300), wobei:
die Prothese (200) Folgendes aufweist:
eine äußere Seite (210) in Richtung der Außenseite des Mundes;
eine innere Seite (220) gegenüber der äußeren oder ausgesetzten Seite (210), welche einen Kanal (230) umfasst, der eine spezifische durch die Position des Implantats (300) bestimmte Neigung aufweist;
die Schraube (100) Folgendes aufweist:
einen Stift, welcher Befestigungsmittel, die zum lösbaren Befestigen der Schraube (100) in dem Implantat (300) angeordnet sind, umfasst;
einen Kopf, welcher zum Aufnehmen der Prothese (200) angeordnet ist, und einen vorspringenden Bereich, welcher meist kugelförmig ist, umfasst,
**dadurch gekennzeichnet, dass**
der vorspringende Bereich höckerförmig ausgebildet ist und mehrere gekrümmte konkave meridionale versunkene Bereiche (110) aufweist, welche zum Aufnehmen eines Griffs (410, 510) eines Handhabungswerkzeugs (400, 500) für die Schraube (100) angeordnet sind;
mit einem Breitengrad zwischen ±80° in Bezug auf den Äquator (100E) des Kopfes.

2. Schraube (100) zum Befestigen einer Prothese (200) an einem Dentalimplantat (300) nach Anspruch 1, **dadurch gekennzeichnet, dass** der Kopf einen Teil umfasst, der auf dem Dentalimplantat (300) sitzt, und einen geriffelten radial vorspringenden Bereich mit Eigenschaften gegen eine Lockerung aufweist.

3. Schraube (100) zum Befestigen einer Prothese (200) an einem Dentalimplantat (300) nach einem der Ansprüche 1 bis 2, **dadurch gekennzeichnet, dass** der Kopf einen kegelstumpfförmigen Teil umfasst, welcher auf dem Dentalimplantat (300) sitzt.

4. Schraube (100) zum Befestigen einer Prothese (200) an einem Dentalimplantat (300) nach einem der Ansprüche 1 bis 3, **dadurch gekennzeichnet, dass** sie 6 versunkene Bereiche (110) umfasst.

5. Chirurgischer Schraubendrehereinsatz (400), Folgendes umfassend:
einen Arbeitsteil, umfassend:
Befestigungsmittel mit einer Form, welche mit der Form des Kopfes der Schraube (100) nach Anspruch 1 übereinstimmt,
die Befestigungsmittel, umfassend:
ein Gehäuse (415) in Form eines im Wesentlichen kugelförmigen Hohlraums, welches einen größeren Durchmesser als der kugelförmige vorspringende Bereich der zu befestigenden Schraube (100) aufweist;
mehrere Verankerungsgriffe (410) in Form eines gekrümmten konkaven vorspringenden Bereichs, welche Klappen (410A) aufweisen, die sich in dem Äquator (400E) des Gehäuses (415) befinden, und angeordnet sind, um in die versunkenen Bereiche (110) zu passen;
ein Handhabungsteil (430), welcher einen stiftförmigen festen Griff (410) zum Bilden des Haltegriffs des chirurgischen Schraubendrehereinsatzes (400), umfasst;
einen dornförmigen Verbindungsteil (420) zum Bilden von Universalverbindungsmitteln, welcher zum Verbinden des chirurgischen Schraubendrehereinsatzes (400) mit einer Ratsche eines Zahnarztes angeordnet ist.

6. Chirurgischer Schraubendrehereinsatz (400) nach Anspruch 5, **dadurch gekennzeichnet, dass:**
das Handhabungsteil Folgendes umfasst:
Öffnungs- und Schließmittel zum Bewegen der Verankerungsgriffe (410) und der Klappen (410A) zwischen: einer Aufnahmeposition, in welcher die Schraube (100) zwischen den Verankerungsgriffen (410) und den Klappen (410A) eingeführt werden kann, und einer Befestigungsposition, in welcher die Schraube (100) durch die Verankerungsgriffe (410) und die Klappen (410A) geklammert ist, wobei die Öffnungs- und Schließmittel Folgendes umfassen:
das kappenförmige, sich an dem Verbindungsteil (420) befindende, Handhabungsteil (430), welches angeordnet ist, um sich zwischen: einer offenen Position, in welcher die Verankerungsmittel (410) und die Klappen (410A) in einer Aufnahmeposition sind, und einer geschlossenen Position, in welcher die Verankerungsmittel (410) und die Klappen (410A) in einer Befestigungsposition sind, zu bewegen;
wobei der chirurgische Schraubendrehereinsatz (400) ebenfalls einen Mechanismus umfasst, welcher zum Bewegen des Handhabungsteils (430) zwischen der offenen und der geschlossenen Position durch eine Bewegung, welche aus einer Gleitbewegung, einer Drehbewegung und Kombinationen davon ausgewählt ist, angeordnet ist.

7. Kit für eine Schraube (100) zum Befestigen einer Prothese (200) an einem Dentalimplantat (300), **dadurch gekennzeichnet, dass** es den chirurgischen Schraubendrehereinsatz (400) nach einem der Ansprüche 5 bis 6, die Schraube (100) nach einem der Ansprüche 1 bis 4 und eine Schutzkappe (450), in welcher die Schraube (100) und mindestens der Arbeitsteil des chirurgischen Mitnehmers (400) in einer sterilen Umgebung umhüllt sind, umfasst.

8. Drehmomentschlüssel (500), umfassend
einen Arbeitsteil, umfassend:
Mitführmittel mit einer Form, welche mit der des Kopfes der Schraube (100) nach Anspruch 1 übereinstimmt, wobei die Mitführmittel Folgendes umfassen:
ein Gehäuse (515) in Form eines im Wesentlichen kugelförmigen Hohlraums, welches einen größeren Durchmesser als der kugelförmige vorspringende Bereich der zu befestigenden Schraube (100) aufweist;
mehrere Verankerungsgriffe (510) in Form eines gekrümmten konkaven vorspringenden Bereichs, welche sich in dem Äquator (500E) des Gehäuses (515) befinden und angeordnet sind, um in die versunkenen Bereiche (110) zu passen;
ein stiftförmiges Handhabungsteil (530) zum Bilden eines Haltegriffs des Drehmomentschlüssels (500);
einen dornförmigen Verbindungsteil (520) zum Bilden von Universalverbindungsmitteln, welcher zum Verbinden des Drehmomentschlüssels (500) mit einer Ratsche eines Zahnarztes angeordnet ist.

9. Schraube (100) zum Befestigen einer Prothese (200) an einem Dentalimplantat (300) nach Anspruch 1, **dadurch gekennzeichnet, dass** die Rippen (130), welche die meridionalen versunkenen Bereiche (110) trennen, sich radial an der Oberfläche (120) ausstrecken, welche die Basis des vorspringenden Teils des Kopfes der Schraube in abgesenkten Abschnitten (140) umgibt.

10. Drehmomentschlüssel (500) nach Anspruch 8, **dadurch gekennzeichnet, dass** sich die Verankerungsgriffe (510) in einem Verstärkungsabschnitt (512) nach innen strecken, und dass die Wand, welche das Gehäuse (515) begrenzt, Aussparungen (513) aufweist, die an die Abschnitte (140) der Schraube (100) gekoppelt werden können.

## Revendications

1. Vis (100) pour fixer une prothèse (200) sur un implant dentier (300), dans laquelle :
la prothèse (200) a :
une face externe (210) vers l'extérieur de la bouche ;
une face interne (220) en regard de la face externe ou exposée (210), comprenant un canal (230), qui a une inclinaison spécifique déterminée par la position de l'implant (300) ;
la vis (100) a :
une goupille comprenant des moyens de fixation disposés pour fixer la vis (100) dans l'implant (300) de façon amovible ;
une tête, disposée pour loger la prothèse (200) et comprenant une zone en saillie qui est principalement sphérique,
**caractérisée en ce que** ladite zone en saillie est en forme d'articulation et a une pluralité de zones creuses méridionales concaves courbées (110) :
disposées pour recevoir une prise (410, 510) d'un outil de manipulation (400, 500) pour la vis (100) ;
avec une latitude entre ±80°, par rapport à l'équateur (100E) de la tête.

2. Vis (100) pour fixer une prothèse (200) sur un implant dentier (300) selon la revendication 1 **caractérisée en ce que** la tête comprend une partie qui s'assoit sur l'implant dentier (300) et a une zone en saillie radiale à cannelures avec des caractéristiques anti-relâchement.

3. Vis (100) pour fixer une prothèse (200) sur un implant dentier (300) selon l'une quelconque des revendications 1-2 **caractérisée en ce que** la tête comprend une partie en forme de rondin conique qui s'assoit sur l'implant dentier (300).

4. Vis (100) pour fixer une prothèse (200) sur un implant dentier (300) selon l'une quelconque des revendications 1-3 **caractérisée en ce qu'**elle comprend 6 des zones creuses (110).

5. Tournevis chirurgical (400) comprenant une partie opérationnelle comprenant :
des moyens de serrage avec une forme qui combine avec la forme de la tête de la vis (100) selon la revendication 1,
les moyens de serrage comprenant :
un logement (415) avec la forme d'une cavité principalement sphérique, ayant un diamètre plus large que la zone en saillie sphérique de la vis (100) à serrer ;
une pluralité de prises d'ancrage (410) avec la forme d'une zone en saillie concave courbée, présentant des rabats (410A) situés dans l'équateur (400E) du logement (415), disposés pour s'introduire dans les zones creuses (110) ;
une partie de manipulation (430) comprenant une prise fixe en forme de goupille (410) pour former la manche du tournevis chirurgical (400) ;
une partie de liaison en forme de mandrin (420) pour former des moyens de liaison universels disposés pour relier le tournevis chirurgical (400) au cliquet de dentiste.

6. Tournevis chirurgical (400) selon la revendication 5 **caractérisé en ce que** :
la partie de manipulation comprend :
des moyens d'ouverture et de fermeture pour déplacer les prises d'ancrage (410) et les rabats (410A) entre : une position de réception, dans laquelle la vis (100) peut être insérée entre les prises d'ancrage (410) et les rabats (410A) et ; une position de serrage, dans laquelle la vis (100) est vissée par les prises d'ancrage (410) et les rabats (410A), lesdits moyens d'ouverture et de fermeture comprenant :
la partie de manipulation en forme de calotte (430) située sur la partie de liaison (420), disposée pour être déplacée entre : une position ouverte, où les prises d'ancrage (410) et les rabats (410A) sont dans une position de réception et ; un position fermée, où les prises d'ancrage (410) et les rabats (410A) sont dans une position de serrage et ;
le tournevis chirurgical (400) comprend également un mécanisme disposé pour que la partie de manipulation (430) se déplace entre les positions ouverte et fermée par un mouvement choisi entre le mouvement de glissement, le mouvement de rotation et des combinaisons de ces derniers.

7. Kit de vis (100) pour fixer une prothèse (200) sur un implant dentier (300) **caractérisé en ce qu'**il comprend le tournevis chirurgical (400) selon l'une quelconque des revendications 5-6, la vis (100) selon l'une quelconque des revendications 1-4 et une calotte protectrice (450) où la vis (100) et au moins la partie opérationnelle du tournevis chirurgical (400) sont encapsulés dans un environnement stérile.

8. Clé dynamométrique (500) comprenant une partie fonctionnelle comprenant :
des moyens d'entraînement avec une forme qui combine avec celle de la tête de la vis (100) selon la revendication 1, les moyens d'entraînement comprenant :
un logement (515) avec la forme d'une cavité essentiellement sphérique, ayant un diamètre plus large que la zone en saillie sphérique de la vis (100) à serrer ;
une pluralité de prises d'ancrage (510) avec la forme d'une zone en saillie concave courbée, situées dans l'équateur (500E) du logement (515), disposées pour s'introduire dans les zones creuses (110) ;
une partie de manipulation en forme de goupille (530) pour former une manche de la clé dynamométrique (500) ;
une partie de liaison en forme de mandrin (520) pour former des moyens de liaison universels disposés pour relier la clé dynamométrique (500) au cliquet de dentiste.

9. Vis (100) pour fixer une prothèse (200) sur un implant dentier (300) selon la revendication 1 **caractérisée en ce que** les nerfs (130) qui séparent les zones creuses méridionales (110) s'étirent radialement sur la surface (120) entourant la base de la partie en saillie de la tête de la vis dans les sections décroissantes (140).

10. Clé dynamométrique (500) selon la revendication 8, **caractérisée en ce que** les prises d'ancrage (510) s'étendent vers l'intérieur dans une section de renforcement (512), et **en ce que** la paroi limitant le logement (515) présente des renfoncements (513), qui peuvent être couplés sur les sections (140) de la vis (100).
